# EUROPEAN PATENT SPECIFICATION

(11) **EP 3 050 000 B1**
(45) Date of publication and mention of the grant of the patent: **18.07.2018**
(21) Application number: 14846718.6
(22) Date of filing: 23.09.2014
(51) Int. Cl.: G06K 17/00, G06Q 30/00, G07G 3/00, G08B 13/24

(54) **PRESENTATION APPARATUS (IOT)**
PRÄSENTATIONSVORRICHTUNG (IOT)
APPAREIL DE PRÉSENTATION (IOT)

(30) Priority: 23.09.2013 HK 13110832
(43) Date of publication of application: 03.08.2016
(73) Proprietor: Chow Tai Fook Jewellery Company Ltd., Hong Kong (CN); Megasoft Limited, Shatin, New Territories, Hong Kong (CN)
(72) Inventor: WONG, Siu, Kee, Hong Kong (CN); TSANG, Siu, Kwong, Hong Kong (CN); MAN, Chun, Sing, Matthew, Hong Kong (CN)
(74) Representative: Marles, Alan David
(86) International application number: PCT/IB2014/064754
(87) International publication number: WO 2015/040597

(56) References cited:
- WO-A1-2008/086531
- CN-A- 101 246 658
- CN-A- 103 165 054
- GB-A- 2 469 343
- GB-A- 2 475 755
- JP-A- 2008 146 476
- JP-A- 2010 257 023
- US-A1- 2007 215 700
- Anthony S.K. Wong ET AL: "HK RFID Awards 2010", , 5 November 2010 (2010-11-05), XP055278874, Retrieved from the Internet: URL:https://www.gs1hk.org/sites/default/fi les/media_plus/event-and-news/publications /casebooks/RFIDAwardCaseBook_2010.pdf [retrieved on 2016-06-08]
- Anonymous: "Electronic Article Surveillance A Technology Comparison Electronic Article Surveillance -A Technology Comparison", , 1 April 2009 (2009-04-01), XP055283262, Retrieved from the Internet: URL:http://www.adt.ie/document-downloads/w hite-papers/EAS_Technology_Comparison_whit e_paper_ADT_NA.pdf [retrieved on 2016-06-23]
- Anonymous: "GS1 EPCglobal's RFID-based EAS Strategic Overview", , 1 September 2009 (2009-09-01), XP055283269, Retrieved from the Internet: URL:http://www.gs1.org/sites/default/files /docs/epc/EAS_Strategic_Overview_v1.0_Appr oved.pdf [retrieved on 2016-06-23]
- Anonymous: "GS1 EPCglobal RFID-based Electronic Articles Surveillance (EAS) Technical Implementation Guide 3", , 1 September 2009 (2009-09-01), XP055283279, Retrieved from the Internet: URL:http://www.gs1.org/sites/default/files /docs/epc/EAS_Tech_ImplementationGuide_v_1 _approved.pdf [retrieved on 2016-06-23]

## Description

### FIELD

The present disclosure relates to apparatus for presentation, and more particularly, to presentation apparatus for presenting valuable or precious articles to customers or potential customers with an aim of facilitating purchasing transaction.

### BACKGROUND

Many consumers enjoy shopping at 'real' or 'physical' shops so that they can feel, touch and closely examine real products as well as comparing products. In addition, many physical shops have shop attendants available to provide personal services such as real time product information, product comparison, advice and comparable products to assist a customer to make purchasing decisions.

During a shopping session, shop assistants often provide customers with many articles to compare with and to choose from. In many shopping occasions, several expensive and/or delicate items such as watches, jewellery, smart phones, or ornamental items may be placed on a presentation apparatus for customer viewing, examination and selection. Such presentation apparatus in retail business is commonly referred to as customer serving trays. A customer serving tray usually includes a main receptacle which allows open access by a viewer so that a viewer can access and remove articles on the tray for examination, close viewing or appreciation before making a purchase decision. Where the items are small and portable, tracking of article movements between a customer and a shop assistant can be difficult, especially when several items are placed on a customer serving tray to promote multiple purchase.

The value or preciousness, and therefore the price, of precious and/or valuable articles are often determined by properties and characteristics associated with the articles. Such properties and characteristics may be multifaceted, time variant and time invariant, and include, for example, design, shape, grading, uniqueness or rarity, material purity, weight or size, and/or price. It would be desirous if information on those properties and characteristics can be readily available at the time when presentation of an article is required.

GB 2,475,755 discloses an anti-theft RFID system comprising two antennae and a processor connected to the antennae to operate two counters, namely, one presence counter for indicating the number of tagged merchandized items detected over the tray, and one absence counter for indicating the number of tagged merchandized items taken out of the tray.

US2007/0215700 discloses RFID enabled storage bins and methods for tracking inventory. The contents-aware storage bin includes a transportable bin unit adapted for placement within a storage bin rack, an RFID reader unit in contact with the bin unit and an RFID antenna which is connected to the RFID reader unit and is in contact with the bin unit. The method for tracking inventory uses a contents-aware storage bin and includes receiving RFID data from an RFID reader over a wireless network, the RFID reader being associated with a transportable bin unit adapted for placement within a storage bin rack and the received RFID data is stored on a network-connected storage device.

HK RFID Awards 2010 discloses a jewellery display tray with an integrated RFID reader and Wi-Fi transceiver. Each item displayed on the tray is given a unique RFID tag, and an automated item count is conducted during sales processes to prevent employee theft and shoplifting.

### DISCLOSURE

There is provided a customer serving apparatus equipped with RFID detectors to monitor and track movement of articles during a customer serving session. The customer serving apparatus, nicknamed "iTray" herein, is primarily a desktop apparatus, for example in the form of a portable tray, for use in retail services, especially in the retail of luxurious items such as jewellery, precious ornaments, pens and watches.

In this disclosure, a serving apparatus comprising a main receptacle for holding articles for customer selection, a data storage device, a processing device comprising a processor, an RFID first detector comprising a first antenna which is to detect and collect product identification information associated with an RFID tagged article when said article is first introduced or checked-in into said main receptacle during a serving session, and an RFID second detector comprising a second antenna which is at a location distal from the main receptacle, oriented to detect radio frequency signals coming from outside of the apparatus and shielded to prevent detecting RFID tags attached to articles on the main receptacle and to check out or deregister an article after said article has been removed from said main receptacle and presented at said RFID second detector; wherein the processor is to classify an RFID tagged article as being viewed if the article is removed from the main receptacle for a time exceeding a threshold time and not checked out by the threshold time and to operate to log viewing history of the RFID tagged article or articles and to store the viewing history in the data storage device; and wherein the viewing history includes the product identification information of articles introduced into the main receptacle, the product identification information of articles removed for viewing, the number of viewings per article, total viewing duration of a viewed article, and/or articles purchased.

### DESCRIPTION OF FIGURES

The present disclosure will be described by way of example with reference to the accompanying Figures in which:-
Figure 1 is a first perspective view showing a presentation apparatus according to an example of the present disclosure,
Figure 1A is a second perspective view of the apparatus of Figure 1,
Figure 1B is a top plan view of the apparatus of Figure 1,
Figures 1C and 1D are side elevation views showing lateral sides of the apparatus of Figure 1,
Figure 1E is a cross-sectional view of the example apparatus of Figure 1 taken along line A-A' of Figure 1B,
Figure 1F is a bottom plan view of the apparatus of Figure 1,
Figure 2 is a schematic block diagram of example operation circuitry for use on the example apparatus of Figure 1,
Figure 2A is a schematic block diagram of example operation circuitry installed on the example apparatus of Figure 1,
Figure 2B is a schematic block diagram of the example circuitry of Figure 2B in more detail,
Figure 2C is a schematic diagram depicting example arrangement and operation of the RFID module of Figure 2B,
Figure 2D is a schematic circuit diagram depicting example implementation of the RFID module of Figure 2C,
Figure 3A is a top perspective view showing the apparatus of Figure 1 after removal of the top panel and the article detection antenna,
Figure 3B is a top plan view showing the apparatus of Figure 3A with the article detection antenna in place,
Figure 3C is a schematic view depicting an example antenna element layout suitable for use as an alternative antenna,
Figure 4A and 4B are schematic diagrams depicting information displayed on the first display and the second display when the apparatus is in stand-by mode awaiting access request and authorization,
Figure 5A and 5B are schematic diagrams depicting information displayed on the first display and the second display when the apparatus is in an initial operational state,
Figure 6 is a flow diagram depicting example operation of the apparatus of Figure 1,
Figure 6A is a flow diagram depicting example operation of the apparatus of Figure 1,
Figure 6B is a flow diagram depicting example processor operation of the apparatus of Figure 1,
Figures 7A and 7B respectively show the first and second displays of the apparatus of Figure 1 when in an operation state,
Figures 8A and 8B respectively show the first and second displays of the apparatus of Figure 1 when in another operation state,
Figures 9A and 9B respectively show the first and second displays of the apparatus of Figure 1 when in an operation state following that of Figures 8A and 8B,
Figures 10A and 10B respectively show the first and second displays of the apparatus when one of the three articles on the main receptacle is checked out,
Figure 11A is a flow diagram depicting a flow of operations of the processor upon initialization and detection of article identification data,
Figure 11B is a flow diagram depicting a flow of operations of the processor to obtain article specific information,
Figure 12 is a flow diagram depicting a mode of processor operations after end of a viewing session, and
Figures 12A to 12D are example icons to appear during an end of viewing session data collection process.

### DESCRIPTION

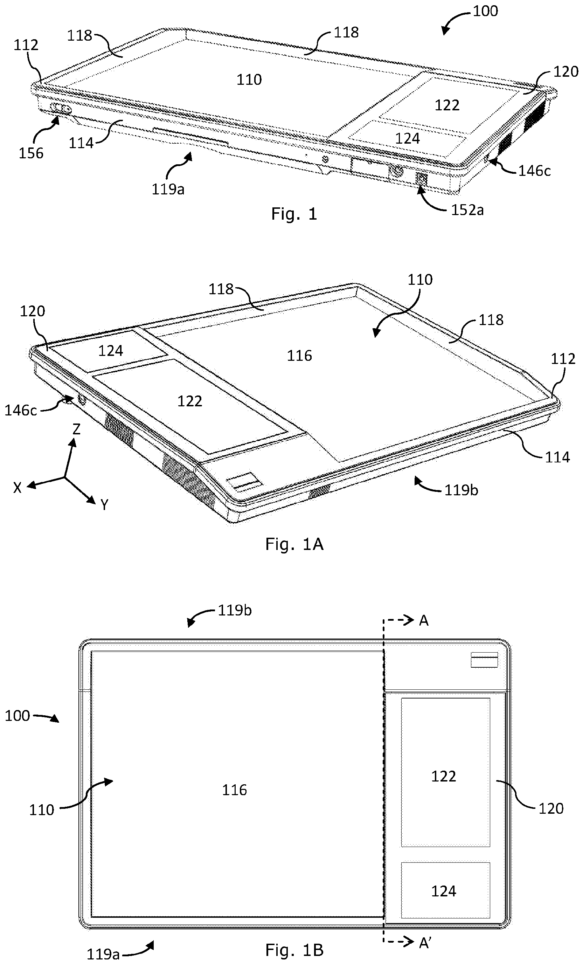

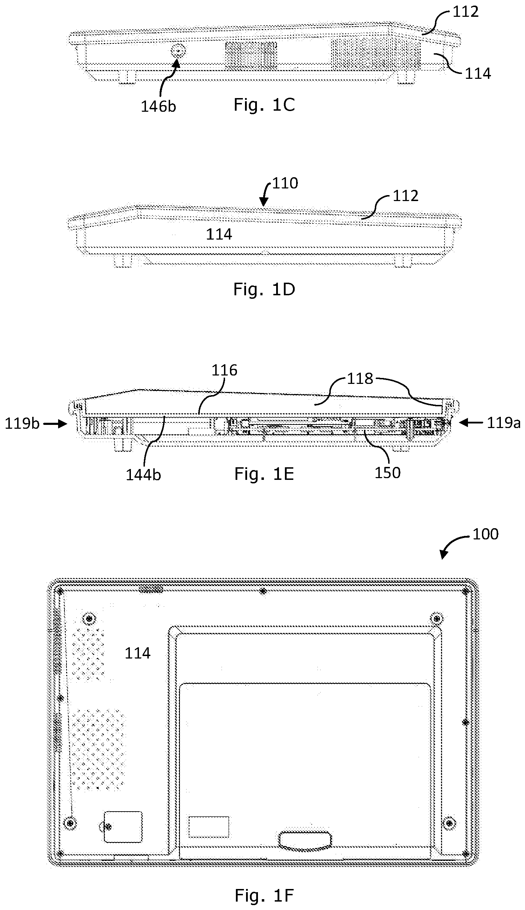

A presentation apparatus **100** depicted in Figures 1 and 1A to 1F comprises a main receptacle **110** and a display region **120** comprising a first display **122** and a second display **124.** The main receptacle **110** and the display region **120** are disposed on a main housing, with the display region on a lateral side of the apparatus adjacent the main receptacle **110.** The main housing is made of hard plastics and comprises an upper housing **112** and a lower housing **114** which are in axial alignment and in mechanical engagement. The main housing defines a rigid structure and a hollow internal compartment to house operational electronics to facilitate operations of the apparatus **100.** The main housing is a fastened assembly of the upper housing **112** and the lower housing **114.**

The main receptacle **110** and the display region **120** are formed on the upper housing **112** with the main receptacle **110** on one lateral side of the upper housing **112** and the display region **120** on the other lateral side of the upper housing **112.** The main receptacle **110** is formed as an indented portion on the top surface of the upper housing **112** and is in the form of a tray having a main surface **116** surrounded by a peripheral wall **118.** The main surface of the tray defining the main receptacle **110** is at a depressed level below the top surface of the upper housing **112** and extends between an operator's end **119a** and a viewer's end **119b** of the apparatus. The peripheral wall **118** extends upwardly (Z-direction of Figure 1A) from boundary of the main surface **116** to surround the main surface and to connect the main surface of the tray to the top surface of the upper housing. The main surface of the tray is open to external access and defines an open tray which is covered with a soft material such as velvet, silk, polyamide or other soft fabrics so that precious articles such as jewellery items can be placed on the tray for customer viewing, appreciation and examination. The tray is to facilitate a viewer to view and access articles on the main receptacle and to facilitate a viewer to remove an article for close examination or appreciation. To facilitate such open access and viewing, the tray is relatively shallow having a typical depth of between 1cm and 3cm.

When the apparatus **100** is placed on a levelled support surface during use, the main surface of the tray is parallel or substantially parallel to the support surface so that precious and/or valuable articles placed on the main receptacle will stay at the placing location unless intentionally moved by an operator or a customer. When in use, the apparatus is to be placed between an operator and a viewer so that the operator and the viewer are at opposite ends of the main receptacle with equal or substantially equal visibility and accessibility to articles on the tray.

The upper housing **112** includes an inclined portion which is on a lateral side of the apparatus and adjacent the main receptacle **110** to define the display region **120.** The display region **120** is inclined towards the operator's end and is disposed such that the display region is to face the operator and to face away from a viewer during a viewing session when the operator is proximal the operator's end and the viewer proximal the view's end. As the display region is inclined to face the operator during use, the information shown on the display region will be readily readable by the operator but not so readily readable by the viewing customer unless with assistance of the operator or through deliberate movement of the viewing customer which will be noticeable by the operator or assistants in the vicinity.

The inclined display region is formed on the upper housing and extends between an elevated ridge and the operator's end. The elevated ridge is formed near the viewer's end and extends transversally from a lateral boundary of the main receptacle to a lateral edge of the upper housing. The display portion inclines gradually from the elevated ridge and stops at the operator's end. The inclination of the display region is designed to facilitate comfortable viewing of information by the operator while sufficient to hide information being displayed on the display portion from the viewer when sitting at the viewer's end. The upper housing includes another inclined portion which extends between the elevated ridge and the viewer's end. The two inclined portions are oppositely facing and cooperate to define a housing portion extending between the opposite ends of the upper housing and resembling a ridged roof as depicted in Figures 1C and 1D. The display region **120** is inclined relative to the main surface of the tray so that a viewer at the viewer's end can have a full view of the tray but not the display region, which is inclined to face away from the viewer's end. In use, the apparatus is intended to be positioned between an operator and a viewer, with the display region facing the operator and facing away from the viewer. A viewer is typically a customer or a potential customer but can be other people such as an interviewee, a valuator or a staff.

The display region comprises a first display **122** comprising a first LCD display and a second display **124** comprising a second LCD display. The first LCD display is mounted on a first window formed on the display region and the second LCD display is mounted on a second window between the first window and the operator's end.

To provide a sufficient useable area to hold precious articles for display and viewing, the main surface of the tray is to make up a substantial portion of the surface area of the upper housing while the display region will take up most of the remaining surface area of the upper housing so that sufficient information can be displayed during operations. In general, the main surface of the tray would make up around 65%-80% of the total projected area of the upper housing in the vertical direction while the display region will take up about 15-30% of that area. Of course, the proportion of the area of the main surface of the tray to the projected area of the apparatus or the proportion of the area of the display region to the projected area of the apparatus is variable and very much dependent on actual requirements or operation environment. In general, an inclination of the display region in the region of between 1.5° to 10° would be useful, while a lower inclination angle of say between 1.5° to 3°, or 2° to 5° would be less noticeable to a viewing customer.

In a portable version of the example apparatus **100** as depicted in Figures 1, the apparatus has the following example dimensions, in which the directions are indicated by arrows of Figure 1:

| | Width (mm) (x-direction) | Depth (mm) (y-direction) | Height (mm) (z-direction) | |
|---|---|---|---|---|
| Apparatus (100) | 440 | 293 | 24.95 | |
| Main receptacle (110) | 298 | 268 | 11.2 (min) | 18.1(max) |
| Display region | 122 | 234 | | |
| First display (7" LCD) | 90 | 151 | | |
| second display (4" LCD) | 90 | 57 | | |
| Display region inclination | | 1.85° | | |
| Display region to apparatus area ratio % | | 22% | | |
| Apparatus weight with battery (kg) | | 2.5 | | |
| Apparatus weight without battery (kg) | | 2.0 | | |

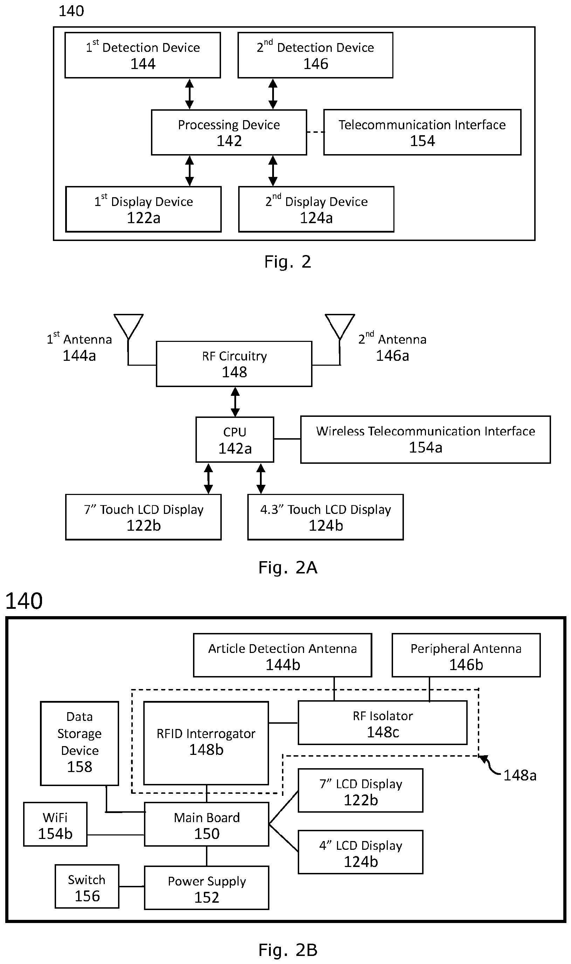

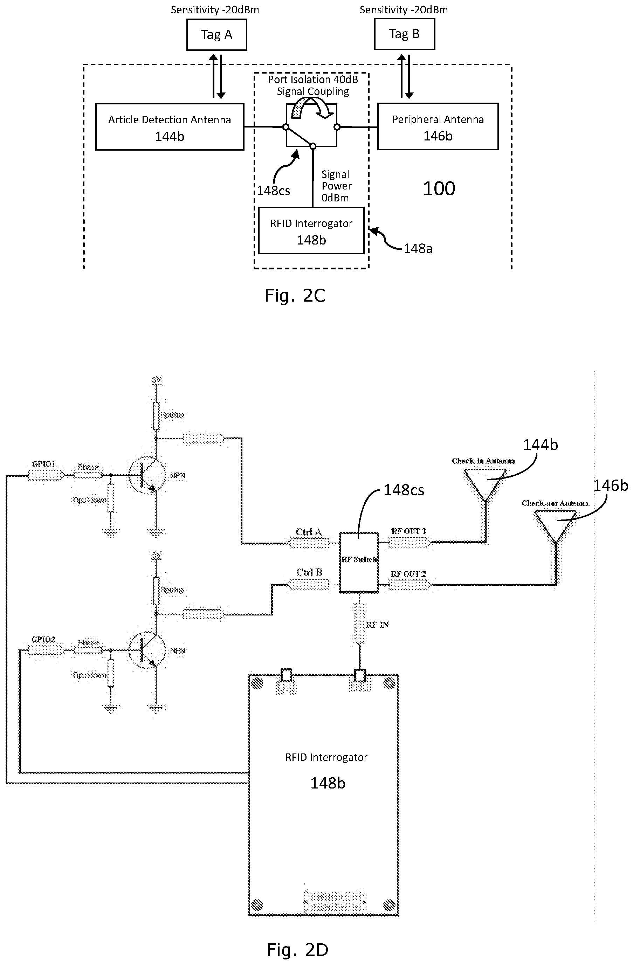

The example apparatus **100** includes example detection and display circuitry **140** depicted in Figure 2. The detection and display circuitry **140** comprises a processing device **142,** a first detection device **144,** a second detection device **146,** a first display device **122a** and a second display device **124a.** The first and second detection devices **144, 146** and the first and second display devices **122a, 124a** are connected to the processing device **142** so that information collected through the first and second detection devices **144, 146** are output to the first and second display devices **122a, 124a** for display after having processed by the processing device **142.** The apparatus **100** may include a telecommunications interface **154** to facilitate data communication with external devices. The processing device **142** may include a single processor such as a single CPU (central processing unit), a plurality of processors each having individually designated duties or tasks, or a cluster of processors to facilitate distributed processing without loss of generality.

The detection and display circuitry **140** of this example apparatus is built around RFID (radio frequency identification) applications. In particular, the example detection and display circuitry **140** is built around the Class 1 Generation 2 RFID standard to operate in the UHF frequency range of 860MHz to 960 MHZ. An RFID system built around this standard, also known as "EPC Gen 2" standard is attractive since the system is compatible with passive RFID tags of low per unit costs. Details of this standard, known as "UHF Air Interface Protocol Standard (Gen2)", is available at http://www.gs1.org/gsmp/kc/epcglobal/uhfc1g2/uhfc1g2_1_2_0-standard-20080511.pdf. RFID readers compatible with EPC Gen2 UHF RFID Reader standards are used for detection.

Figure 2A is a block diagram showing an example embodiment of the detection and display circuitry **140** installed in the example apparatus **100.** The example embodiment comprises a microprocessor as an example processing device **142** to operate as a central processing unit (CPU) **142a.** A 7-inch touch screen-type LCD display **122b** as an example of a first display device **122a** is connected to the CPU **142a.** A 4.3-inch LCD display **124b** as an example of a second display device **124a** is connected to the CPU **142a.** The first and second detection devices **144, 146** are implemented in the form of a first antenna **144a** and a second antenna **146a** connected to a common radio-frequency circuitry **148.** The radio-frequency circuitry **148** is connected to the CPU **142a.** A wireless telecommunication interface **154a** to facilitate data communication with external devices is also connected to the CPU **142a.**

The detection and display circuitry **140** of Figure 2A is to operate as a backbone or infrastructure of the apparatus of the present disclosure. An example implementation of the detection and display circuitry **140** of Figure 2A is depicted in Figure 2B and most of the control and operational circuitry is housed inside the main housing and underneath the display region **150.** The example detection and display circuitry **140** of Figure 2B which is to form an operational backbone of the apparatus **100** of Figure 1 comprises a main control board **150** on which the CPU **142a,** data storage devices, data input device, data output device, data communication devices, peripheral devices and other operational electronics are mounted. A wireless data communication device in the form of a WiFi module 154b is also connected to the CPU **142a** to facilitate data communication between the apparatus and a WLAN (wireless local area network) and/or external network or devices. The data storage devices **158** include solid state memories such as RAM, ROM, SD card and other devices such as a hard disk. The input/out devices include USB/micro USB or other data I/O ports. The 7-inch touch screen-type LCD display **122b** includes finger sensors and operates as an input port. The peripheral devices include a battery indicator, a microphone, speakers, or alarms. The main control board **150** obtains operation power from a secondary battery **152** and a power switch **156** is provided on the operator end **119a** to turn on or turn off power supply to the main control board **150.** A DC power socket **152a** is provided on the operator end **119a** to supply power to the main control board when an external DC power supply is operational. The RF circuitry comprises an RFID module **148a.** The RFID module comprises an RFID interrogator module **148b** and an RF isolator module **148c.** The RFID module **148ba** is connected to the first antenna **144a** which is to operate as an article detection antenna **144b** and the second antenna **146a** which is to operate as a peripheral antenna **146b.** The RFID interrogator **148b** is to transmit interrogation signals and to receive authentication replies from passive RFID tags and is available in module forms. A single RFID RFID interrogator **148b** is shared by the first **144a** and second **146a** antennae to facilitate a more compact, lighter weight and less costly portable apparatus.

As depicted in Figures 2C and 2D, the RF module comprises an RF interrogator **148b** which is connected to an RF switch **148c** to facilitate shared use of a single RF interrogator by the first antenna **144a** which is to operate as the article detection antenna **144b** and the second **146a** antenna which is to operate as the peripheral antenna **146b.** The RF switch **148c** is to facilitate alternative formation of a first RF signal path and a second RF signal path with adequate RF isolation between the two RF signal paths. In this example, the first RF signal path is formed by RF connection between the RF interrogator **148b** and the article detection antenna **144b** and the second RF signal path is formed by RF connection between the RF interrogator **148b** and the peripheral antenna **146b.** The example RF switch **148c** has isolation of about 40dB between adjacent ports to provide the required RF isolation and to mitigate undesirable RF signal coupling between the two signal paths. In the example implementation as depicted in Figure 2C, the RF signal power to be transmitted by the RF interrogator **148b** for interrogation is set of 0dBm. The detection sensitivity of each of the article detection antenna **144b** and the peripheral antenna **146b** is the same and is set to be -20dBm.

Referring to Figure 2D, the RF switch **148c** comprises a first switching control port **Ctrl A,** a second switching control port **Ctrl B**, a first RF signal output port **RF OUT 1**, a second RF signal output port **RF OUT 2**, and an RF signal input port **RF IN.** The first and second switching control ports **Ctrl A, Ctrl B** are connected to corresponding control ports on the RF interrogator **148b** to facilitate switching control of the RF switch **148c.** The first RF signal output port **RF OUT 1** is connected to the article detection antenna **144b** to form the first RF signal path. The second RF signal output port **RF OUT 2** is connected to the peripheral antenna **142b** to form the second RF signal path. The RF signal input port **RF IN** is connected to an RF port of the RF interrogator **148b** to form an RF signal path for transmission of interrogation signals to the antennae and receipt of response signals from the antennae **144b, 146b.** The switching of the RF switch **148c** is operated by control signals from the control ports of the RF interrogator **148b** and the control signals are originated from the CPU **142a.** The switching frequency or switching intervals of the RF switch **148c** will determine the response time of the detection circuitry **140** and are typically set to meet a desirable response speed so that an operator can be made aware of status changes detectable at the antennae **144b, 146b** within an anticipated time.

A typical switching frequency may be in the region of 1Hz to 10Hz so that RFID signals present at the antennae can be updated at intervals of between 0.1 second and a second. Where a quicker response time is required, the switching frequency may be set to be in the region of 10Hz to 10kHz so that the response time can be less than **100** millisecond (ms) and delay associated with the switched reading would not be human perceivable. In order to avoid confusing display of status information, the CPU may be set to only output such status information when the status has been stabilized, for example, no change in several seconds.

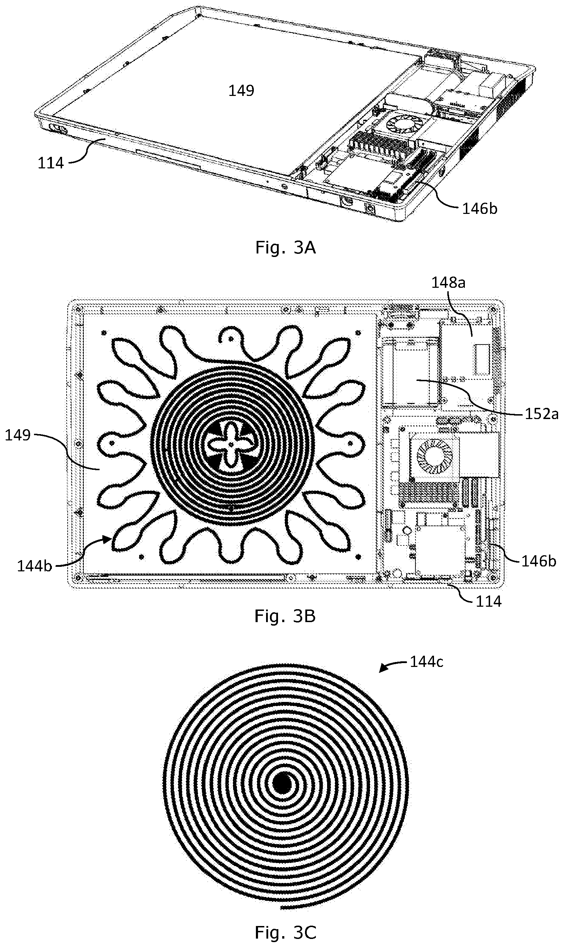

The first antenna **144a** is configured as an article detection antenna **144b** to detect articles on the main receptacle. In order that articles on the main receptacle **110** and carrying RFID tags can be effectively detected, the article detection antenna **144b** is required to have an effective detection range covering at least the entire main surface **116** of the tray on the main receptacle **110.** An example antenna suitable for covering the entire main surface **116** is a distributed antenna such as the article detection antenna **144b** depicted in the partially exploded view of Figure 3A. This article detection antenna **144b** is substantially planar and has planar detection elements that are distributed and/or spread in an area comparable to the area of the entire main surface **116.** The article detection antenna **144b** is placed immediately underneath the main receptacle **110** with the detection plane defined by the planar detection elements parallel or substantially parallel to the main surface **116.** To promote maximal detection of signals coming from articles held in the main receptacle **110,** the planar area of the article detection antenna **144b** as defined by the planar extent of the entirety of the planar detection elements is comparable to that of the main surface **116** of the tray and is aligned therewith so that the planar extent of the planar detection elements of the article detection antenna **144b** substantially overlaps or coincides with that of the main surface **116** of the tray.

The article detection antenna **144b** is to detect radio frequency signals coming in from RFID tags on the tray or the main receptacle **110.** Radio frequency signals not coming from the tray or from the main receptacle **110** are treated as spurious or unwanted signals and the reception thereof is to be mitigated. To provide radio frequency shielding against unwanted or spurious signals, the article detection antenna **144b** is mounted on the top surface **149** of a metal casing with the planar detection elements sitting on the top surface **149** of the metal housing and exposed to and facing the bottom surface of the main receptacle **110.**

The metal casing has a planar extent comparable, if not slightly larger, than that of main receptacle and has a top surface **149** parallel to the main surface **116** of the tray so that when the article detection antenna **144b** is mounted on the top surface of the metal casing, the planar detection elements are parallel to the main surface **116** for maximal detection of radio signals coming from the main surface **116** and minimal detection of radio signals coming from other orientations. As an optional feature, the metal casing may include downwardly a depending wall or skirt extending around boundary of the top surface to enhance radio frequency shielding. An alternative antenna layout suitable to operate as an article detection antenna is depicted in Figure 3C. While each of the antennas depicted in Figures 3B and 3C include planar detection elements which are arranged in a spiral form to enhance more effective detection coverage, the antenna may be in other forms, for example, may follow the shape of the main receptacle **110** so that the detection elements are parallel to the sides of main receptacle and parallel to other detection elements on the same side of the receptacle and gradually spiralled towards its centre. In general, the overall shape and extent of the article detection antenna **144b** will be comparable to the overall shape and extent of the **110** to facilitate more effective detection coverage. Another re-chargeable battery, for example, a tablet-shaped battery having a larger energy capacity than the battery **152a,** is mounted on the lower housing and below the metal casing to provide operation power as part of the power supply **152.**

The second antenna **146a** is configured as a peripheral antenna **146b** to detect radio frequency signals coming from outside of the apparatus **100** but not from RFID tags attached to articles on the main receptacle **110.** The second antenna **146a** is mounted near a corner on the operator's end **119a** of the apparatus which is distal from the main receptacle **110.** The mounting of the second antenna **146a** at a location distal from the main receptacle **110** and hence the article detection antenna **144b** is to mitigate detection of radio signals coming from the main receptacle. This peripheral antenna **146b** has planar detection elements which are arranged to define a detection plane that is orthogonal or substantially orthogonal to the detection plane of the article detection antenna **144b.** This peripheral antenna **146b** is oriented to detect radio signals coming from outside of the apparatus and in a direction (-X) towards the lateral side of the apparatus distal from the main receptacle **110.** The second antenna **146a** is for detecting radio frequency signals coming in from a localised source such as an access card or a single RFID tag and therefore has a physical and detection area substantially less than that of the article detection antenna **144b.** In an example, the second antenna **146a** is formed on a printed circuit board and is inserted vertically into a vertical slot formed on the lower housing **114** so that its detection surface is outwardly (X-direction of Figure 1A) facing. Radio frequency signal shielding is provided on the backside of the second antenna **146a** to mitigate receipt of unwanted or spurious radio frequency signals coming from the backside of the second antenna **146a.** The backside of the second antenna **146a** is the side facing the main receptacle **110** and the unwanted or spurious radio frequency signals would include residual RFID signals coming towards the second antenna **146a** after traversing the radio frequency shielding on the article detection antenna **144b.**

While the article detection antenna **144b** and the second antenna **146a** are both formed as a printed circuit board (PCB) antenna with the detection elements imprinted on a substrate of a PCB, each or one of the antennae can be formed on other substrates or mediums and in a membrane form or a template form without loss of generality.

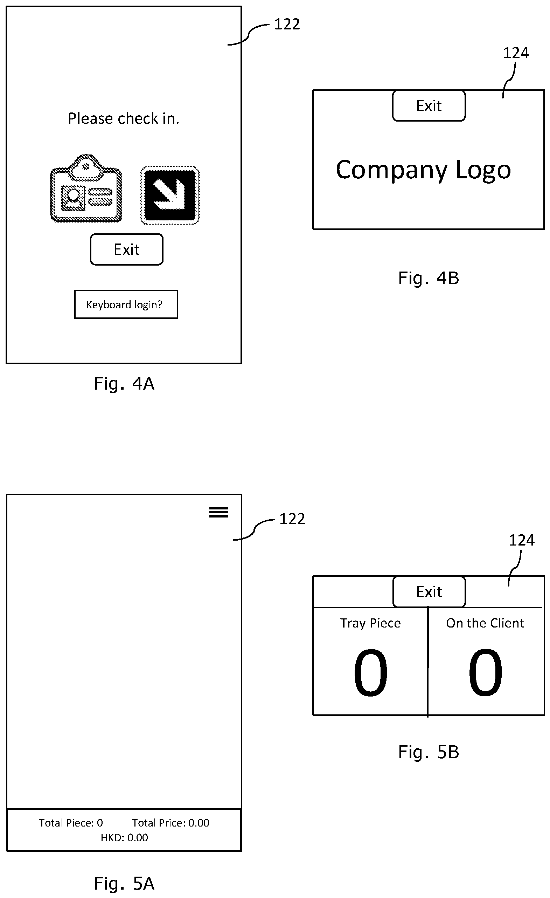

To use the apparatus **100,** an operator will turn on the power switch **156** and the processor will execute initialization instructions to initialise. After completion of initialization procedures, the detection and display circuitry **140** will be activated and the apparatus **100** will be ready to operate upon validation of the access authorization of an operator by the processor **142a.** Upon completion of the initialization process, an access invitation message such as an image showing how to access or 'check in' will be displayed on the second, larger, display **122** as depicted in Figure 4A. A company logo or other non-sensitive information may be displayed on the first, smaller, display **124** as depicted in Figure 4B. At this time, the detection and display circuitry **140** will be operational and the RF interrogator **148b** will repeatedly transmit interrogation signals to the second antenna **146b** to detect request for access. The interrogation signals may be sent at a higher repetition frequency, for example, **100** interrogations per second, to ensure a prompt response to a request to access. At this stage, the RF interrogator **148b** does not need to send interrogation signals to the first antenna and the RF switch **148c** may be maintained at a position corresponding to one that maintains constant connection of the second RF signal path to the RF interrogator **148b** but not the first signal path.

To gain authorized access to operate the apparatus **100,** an operator will present an RFID enabled access card to an access authorization detector on the apparatus **100.** In this example, the second antenna **146a** is configured as an access authorization detector and the portion of the main housing facing the detection surface of the second antenna **146a** is grille-shaped to define a detection window **146c.** An intended operator will present the RFID enabled access card to the detection window **146c** which is on one lateral side of the apparatus **100** proximal the display region and the operator's end **119a.** When the RFID information contained in the access card and detected by the apparatus **100** through operation of the RF interrogator **148b** is verified by the CPU **142a** as consistent with valid access authorization, the apparatus will enter into actual operation modes. As an additional feature or an alternative, an intended operator may access the apparatus **100** by entering an authorization code through an interactive input window on the touch screen **122** depicted in Figure 4A.

After access to the apparatus **100** has been validated, the apparatus **100** will enter into an operation mode upon execution of prescribed instructions. Initially, no article is on the main receptacle and nullity information corresponding to a condition of zeroes or 'no article has been introduced' will be displayed on the first **122** and second **124** displays as depicted in Figures 5A & 5B. When the apparatus **100** is in operation, the RF interrogator **148b** will in response to instructions of the processor repeatedly send interrogation signals to the article detection antenna **144b** to detect and monitor status of articles which carry RFID tags and are on the main receptacle **110.** In addition, the RF interrogator **148b** will in response to instructions of the processor **142** repeatedly send interrogation signals to the second antenna **146b** to detect and monitor conditions corresponding to conditions requiring attention or special treatment. As there may be a plurality of articles carrying RFID tags on the receptacle at the same time, and movement of such articles in and out of the man receptacle **110** may be expected to more frequently occur than conditions that can be expected to be detectable at the second antenna **146b**, the time used by the RF interrogator **148b** to serve the article detection antenna **144b** will be substantially higher than that used to serve the second antenna **146b** where a single RF interrogator **148b** is shared between the two antennae so that interrogation signals need to be sent alternatively to the antennae.

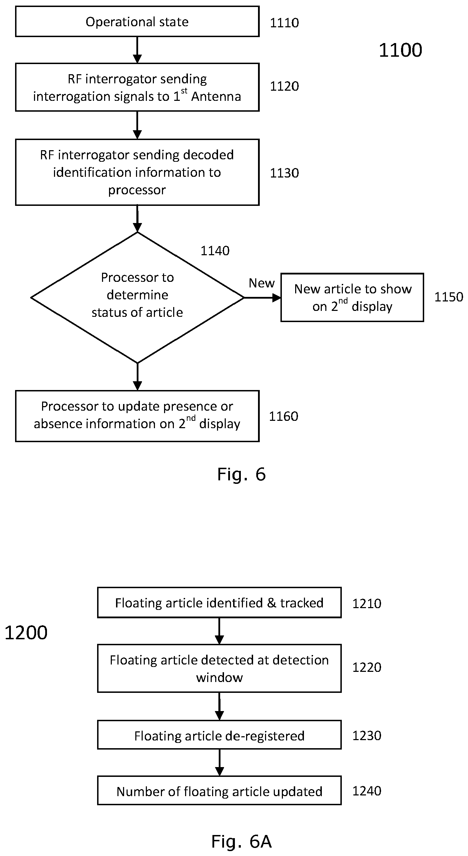

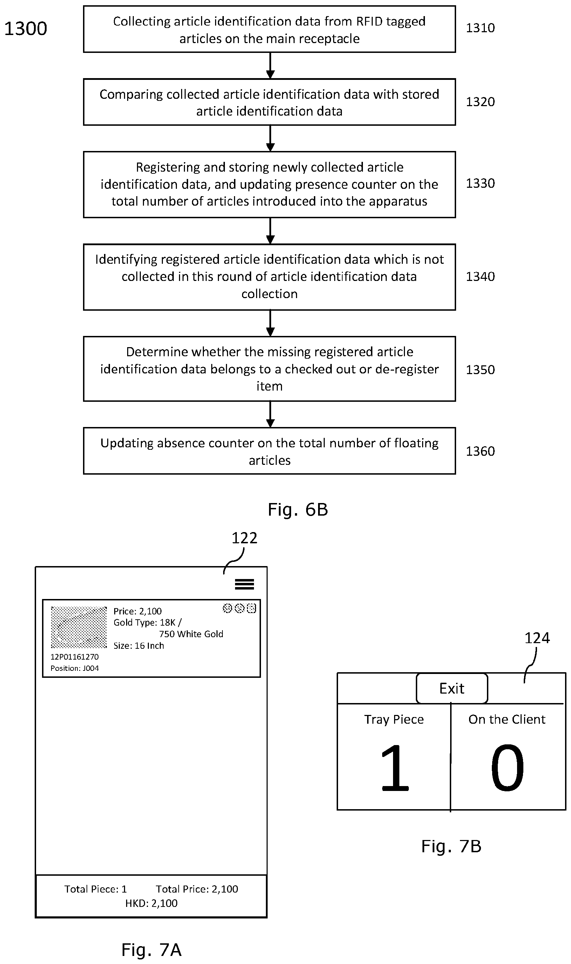

Example operation of the apparatus **100** will be described with reference to the flow diagram **1100** of Figure 6. After the apparatus **100** has entered into operational mode at **1110,** the RF interrogator **148b** will send encoded interrogation signals to the article detection antenna **144b**, as depicted in **1120.** When radio signals received at the RF interrogator **148b** are from the article detection antenna **144b** and correspond to RFID signals, the RF interrogator **148b** will forward decoded RFID information containing article identification information to the processor **142** at **1130.** Upon receipt of the article identification information, the processor **142** will determine whether the article identification information received include that of a new article or an existing article at **1140.** If the received article identification information includes that of a new article or a plurality of new articles, the processor will generate information relating to the new article or articles and display the relevant article information on the first display at **1150.** If the received article identification information corresponds to article identification information of existing articles, the processor will determine whether an existing article which was present during the last update has become missing and whether any existing article which was absent during the last update has become present again and to provide presence and absence information on the first display **124** at **1160.** An article is described as a 'new article' herein if the article is introduced into the main receptacle **110** for the first time during the current presentation session or viewing session. An article is described as an 'existent article' herein if the article has been introduced into the main receptacle **110** during the current presentation session or viewing session. An article is described as a 'floating article' herein if the article has been introduced into the main receptacle **110** but has been temporarily moved out of the main receptacle **110** and has not be returned to stock or 'checked out'.

In order to assist an operator to track movement of RFID tagged articles after introduction into the apparatus during a customer serving session, the processor 142 is to maintain a first counter and a second counter. The first counter ("presence counter") is to track the number of RFID tagged articles which are present on the main receptacle. The second counter ("absence or floating counter") is to track the number of RFID tagged articles which are moved out of the main receptacle after introduction into the main receptacle and before returning to the shop's stock. The instantaneous value of the first counter is to be displayed in a first sub-window on the second display **124** and the instantaneous value of the second counter is to be displayed in the second sub-window to provide visual assistance to the operator.

As shown in Figure 5B, the second display **124** includes a first sub-window to provide the number of articles which has been introduced into the main receptacle and a second sub-window to provide the number of articles which are floating articles. A floating article is presumed to be with a current viewer and the number of floating articles is displayed under the heading "on the client" in the second sub-window. In this example, the first sub-window of the second display **124** is for indicating the number of articles that is present on the main receptacle and the second region of the second display is for indicating the number of articles that is moved out of the main receptacle **110** after introduction into the main receptacle but not yet checked out. In processing terms, the first sub-window is to display the instantaneous numerical value of a fist counter corresponding to a presence counter and the second sub-window is to display the instantaneous numerical value of a second counter corresponding to an absence counter, In operation terms, the first sub-window of the second display **124** is for indicating the number of articles that is present on the main receptacle and the second region of the second display is for indicating the number of articles that is moved out of the main receptacle **110** after introduction into the main receptacle but not yet checked out.

Referring to the flow diagram **1200** of Figure 6A, an article will be treated as a floating article at **1210** when the article is removed from the main receptacle **110** after introduction. Where a floating existent article is to be returned to the stock, the operator will present that article to the detection window **146c** and the floating article will be deregistered from the list of existent or introduced articles at **1220.** After de-registration, the number of floating articles will be updated at **1230.** The de-registration process is also referred to as a 'checking out' process herein. As the article identification antenna **144b** operates to detect introduction of an article into the main receptacle, the article identification antenna **144b** is also described as a 'check-in antenna' herein. Where the second antenna **146b** is to operate to de-register an article from the list of 'existent articles', the second antenna **146b** will also be referred to as a 'check-out antenna' and the detection window **146c** will then serves as a check-out port. Of course, the second antenna **146b** has other functions as described herein such as to facilitate access request detection.

In some modes of operation, the apparatus **100** is to operate to monitor and track articles introduced into the main receptacle and their subsequent status.

Referring to the flow diagram **1300** of Figure 6B, the processor **142** in such modes of operation is to operate the first detection device **144** to detect and collect article identification data from RFID tagged articles on the main receptacle **110** after initialization has completed as depicted in **1310.** Upon collection of article identification data from the main receptacle **110,** the processor is to compare the collected article identification data with article identification data stored in the local data storage as depicted in **1320.** The identification data stored in the local data storage are article identification data collected during the last round of data collection and has included information on number of articles present on the main receptacle and number of floating articles and their respective identification date. If the collected article identification data include new article identification data of an article which was not previously collected and registered in a current viewing session, that new article identification data will be treated by the processor as corresponding to an article which is newly introduced into the main receptacle. Upon detection of the presence of a new article on the main receptacle, the processor will at **1330** register the new article as an "introduced item", to store the article identification data of the newly introduced article, and update a presence counter to keep track on the total number of articles introduced into the apparatus during a session. The processor will determine (with reference to the stored article identification data) whether any registered article identification data is not present (or is absent or missing) in this latest round of article identification data collection at **1340,** and to determine whether the missing article identification data corresponds to that of a checked-out or de-registered item at **1350.** If the missing article identification data corresponds to that of a checked out item, the number of floating articles will be reduced compared to last number. If the missing article identification data does not correspond a checked out item, the number of floating articles will be increased compared to last number. At **1360** the processor will update an absence counter to keep track on the total number of instantaneous floating articles in the current viewing session.

Example operations during an example viewing session will be explained with reference to Figures 7A to 10B.

After completion of the initialization process, an article having an associated RFID tag (an "RFID tagged article") is introduced into the main receptacle by an operator and placed on the velvet floor of the main receptacle **110.** When the check-in antenna has detected the RFID signals emitted by the RFID tag associated with the newly introduced article, the processor **142a** will search through its accessible databases and retrieve product related information associated with that specific RFID. In this example, EPC code is used as an example of unique identification code for retrieving information relating to an RFID tagged article. The accessible databases may include databases stored on the apparatus or accessible via telecommunications means such as the WiFi frontend or LAN connection. Selected product related information will be displayed on the first display as depicted in Figure 7A. The processor will increment the presence counter by 1 and the number "1" is displayed on the first sub window of the second display as depicted in Figure 7B as there is one RFID tagged article introduced into and present on the main receptacle **110.** At this time, there is no floating article, and the number "0" is displayed on the second display portion of the second display to indicate that there is no floating article. In this example, the first RFID tagged article that is introduced into the apparatus **100** is a gold ring.

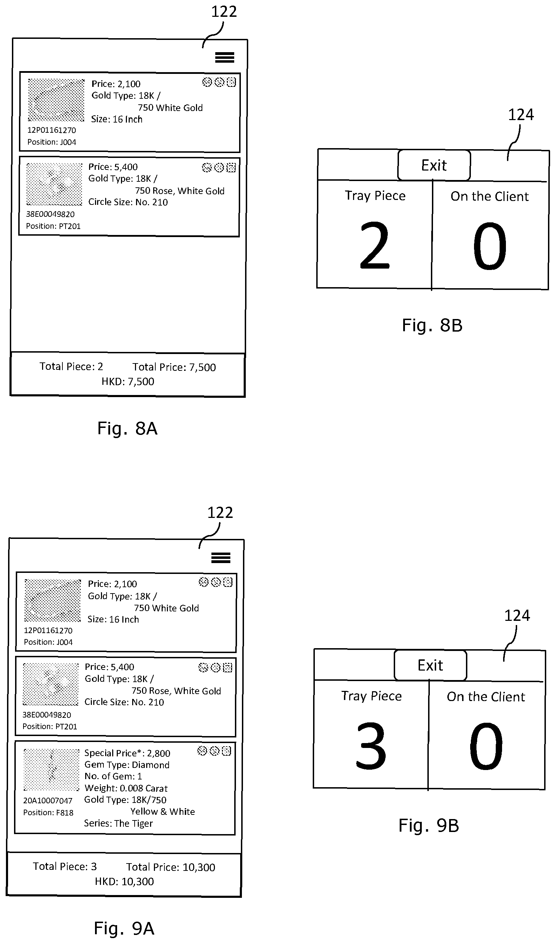

Next, a second RFID tagged article is introduced into the main receptacle **100** by the operator. With the introduction or "checking-in" of the second RFID tagged article, there is now a total of two RFID tagged articles introduced into and present on the apparatus. Upon detection of the second RFID tagged article by the check-in antenna **144b** and the processor selected information relating to the newly introduced article will be presented in the first display as depicted in Figure 8A. The processor will increment the presence counter by 1 and update the first display region of the second display so that the number "2" is displayed to indicate that a total of two RFID tagged articles is present on the main receptacle **110,** and the number "0" is displayed on the second display portion of the second display to indicate that there is no floating article, as depicted in Figure 8B. In this example, the second RFID tagged article that is introduced into the apparatus **100** is a gold pendant.

A third RFID tagged article is introduced into the main receptacle by the operator. With the introduction of the second RFID tagged article, there is now a total of three RFID tagged articles introduced into and present on the apparatus **100.** Upon detection of the presence of the third RFID tagged article by the check-in antenna **116** and the processor, the processor will update the first display region of the second display so that the number "3" is displayed to indicate that a total of three RFID tagged articles is present on the main receptacle **110,** and the number "0" is displayed on the second display portion of the second display to indicate that there is no floating article, as depicted in Figure 9A. Selected product related information of all the three RFID tagged articles is also retrieved from the product database and displayed on the first display by the processor as depicted in Figure 9B. In this example, the first RFID tagged article that is introduced into the apparatus **100** is a diamond ring.

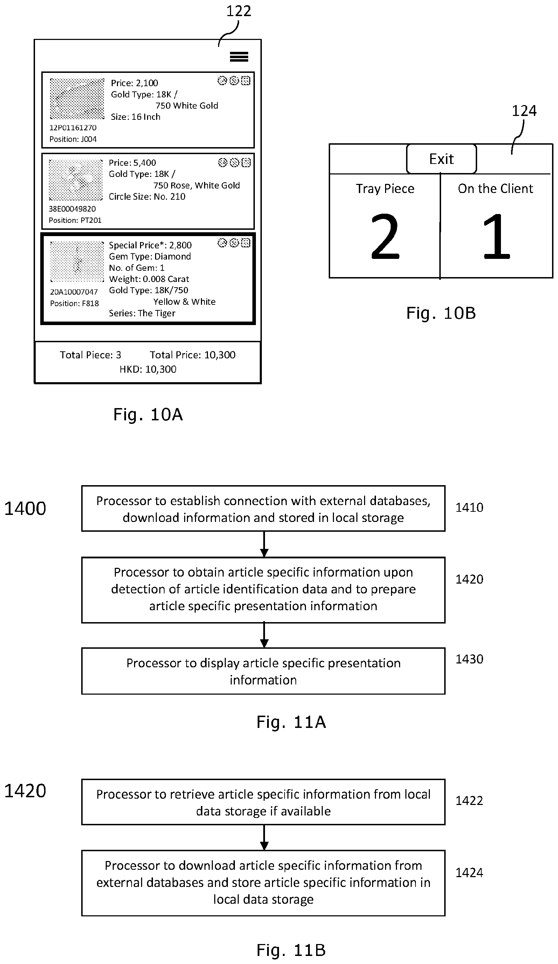

One of the three RFID tagged articles is then moved out of the main receptacle **110** for customer viewing and that moved article will be out of the detection range of the check-in antenna **144b.** When the presence tracking assembly comprising the check-in antenna **144b** and the processor **142** can no longer detect the presence of that article on the main receptacle **110,** the assembly will take the non-detection as an indication that the article has been moved out of the main receptacle. At this time, the process will decrement the presence counter by "1" and increment the absence (or floating) counter by "1" to reflect the removal as depicted in Figures 10A and 10B. As an optional feature, part of the product related information relating to the floating article, for example, the product ID or appearance may have a different visual representation to that of the articles present on the main receptacle so that the operator can have the immediate knowledge of which specific article is or articles are floating. The difference in visual representation may be by way of different colour schemes, flashing, highlight, or other forms without loss of generality.

When the floating article is returned to the main receptacle **110,** the presence tracking assembly will update the information and the states of the display will return to that of Figures 9A and 9B.

On the other hand, if the operator decides to return the floating article to the shop's stock or inventory control, the operator will place the RFID tagged article against the check-out port **146c.** When the RFID tagged article is placed in proximity of and against the check-out port **146c,** it is within the detection range of a check-out assembly comprising the check-out antenna **146b** and the processor **142.** When the processor **142** has detected presence of the RFID tagged article at the check-out port, the processor will register that RFID tagged article as a "checked-out" article. Once an article has been checked out and registered as a checked-out article, the apparatus will no longer track its movement or whereabouts unless the article is re-introduced onto the main receptacle. When the article has been checked out, the processor **142** will update its counter, including the presence counter and the absence counter, to reflect the discharge of an article from scrutiny measures provided by the apparatus.

When a viewing session has come to an end, an operator can according to the information on the apparatus complete a purchase transaction.

In this example, the floating article is the last article introduced into the main receptacle which is depicted in Figure 9A. Upon checking out of this last article, the first display is updated so that the product information relating to this first article is no longer shown. In addition, the presence counter and the absence counter are also updated to reflect that the first article has been checked out. Specifically, each of the presence and absence counters is decrement by 1 to reflect the check out or discharge. At this point, the information displayed on the first and second displays are restored to that of Figures 8A and 8B.

It will be noted that when the RFID tag at the check-out port **136c** is out of the detection range of the check-in antenna **144b** due to the distance of separation as well as the RF shielding, the presence of the RFID tag at the check-out port will not be detected by the check-in antenna, even though the physical separation between the check-out port and the check-in antenna is in the region of 10-15 cm only.

The RFID tag used in this example is formed on one side of a foldable label carrying selected product related information such as product ID, serial number, price, quality, or other relevant description or information. An RFID antenna is integrally formed on the other side of the foldable label and an RFID circuit is bonded to the antenna. A miniaturised and foldable RFID tag is useful for article of a small size and high value, such as jewellery items of the present examples. The RFID tags are folded into one third of the unfolded size.

After the customer sessions has ended, the operator will check out all the articles remaining on the main receptacle individually or simply authorize bulk check out of all items by activating a bulk check out function. In the example apparatus, the display region **120** and the detection window **146c** are both located on the right side of the apparatus **100** to suit a right-handed user. The display region **120** and the detection window **146c** may alternatively be located on the left side of the apparatus **100** to suit a left handed user. In some embodiments, the display region **120** and the detection window **146c** may be located on the middle of the apparatus 100 so that the main receptacle 100 comprises trays on both sides of the display region **120,** and with the detection window **146c** on the operator's end.

At the end of the customer serving session, the identification of articles which have been introduced into the main receptacle and/or the identification of articles which have been moved out of the main receptacle for customer examination will be logged for subsequent or future use. To distinguish between the removal of an article form the main receptacle for customer viewing and that for straight check out, a threshold floating time, say 10-20 seconds, may be used to differentiate the two types of action. For example, where the floating time exceeds 10 seconds, the floating time will be interpreted as corresponding to customer viewing, rather than straight check-out.

To further utilise the logged information, the apparatus includes an interactive process to collect information regarding the customer of that customer serving session for future use. The process may include the steps of the operator entering information relating to personal particulars, events that trigger the purchase or the shopping exercise, purpose of the purchase or the shopping exercise, geographic origin of the customer, language used by the customer, or other information which may be used for service and/or business enhancement. In some modes of operation, the apparatus **100** is to cooperate with external databases. For example, the apparatus **100** may cooperate with external databases to obtain and prepare presentation information for a viewer. In general, presentation information to be presented to a viewer during a viewing session typically comprises "article specific information" which is information specific to an article and "general information" which is information relating but not specific to an article. Article specific information typically includes selected information relating to shape, appearance, style, quality, colour, grade, purity, weight, total number of articles in production, number of articles in stock, pricing formulae, latest auction or bid prices and/or certification number of the article. Article specific information may optionally include promotion information on a particular article such as extra discount, rebates, etc. General information is typically non-article specific information and typically includes selected general information such as information relating to merchandise price such as price of precious metals including gold, silver, platinum, etc.; price of precious stones including diamond, sapphire, emerald, jade, etc.; currency exchange rates; promotional discounts to a class of customers such as loyalty member scheme or credit card schemes.

Referring to the flow diagram **1400** of Figure 11A, the processor **142** upon completion of initialization of the apparatus **100** will establish data connection with external databases via the telecommunications interface **154** and download information which may be used in subsequent viewing sessions at **1410.** The information to be downloaded may include time-variant information such as merchandise price information, currency exchange rates, and current or special promotional schemes. In addition, the information to be downloaded may include article specific information. Such article specific information may be on items which have been identified as popular or hit items. The article specific information may contain time invariant or non-time sensitive information such as article identification number, information on shape, appearance, size, style, quality, content, colour, grade, purity, weight, and/or certification number of the article; and/or time variant information such as the total number of articles in production, total number sold, number in stock, identification of shops having stock, pricing formulae, special sale terms, etc. The downloaded information is stored in local data storage devices **158** for subsequent use.

When an actual viewing session begins, the processor **142** will upon detection of a newly introduced article prepare presentation information specific to that article for display at **1420.** The article specific presentation information to be displayed is primarily article specific information comprising time invariant information and time variant information. For example, the time invariant information being displayed on Figure 9A includes gold content, weight, shape and appearance, size, position, and article identification data of the articles, while the offer prices are example of time variant information. Where the article specific information is available locally, the processor will retrieve the relevant information from the local data storage. Otherwise, the processor will request the article specific information from the external database by sending the associated article identification data to the external databases. The price information is computed according to a formula which is specific to the article with reference to time variant merchandise price information. After the price has been calculated, article specific presentation information will be displayed on the first display **122** at **1430,** with individual price set out adjacent a graphic representation of the article and total price set out at the bottom of the first display **122** as depicted in Figures 7A, 8A, 9A and 10A.

Referring to the flow diagram of Figure 11B, the processor will search for article specific information in the local data storage at **1422** to facilitate preparation of presentation information. If the article specific information in not available in the local data storage, the processor will contact external databases to download the article specific information at **1424.** When an article is removed from the main receptacle during an active viewing session, whether for viewing or for checking out, the processor **142** will upon detection of a status of absence of the article from the main receptacle classify the article as a "floating article" and generates visual indicia on the first display **122** to inform the operator of such as status until the article is subsequently checked out or returned to the receptacle.

During the course of a viewing session, the processor **142** will operate to log and store the viewing history in the local data storage. The information to be logged to form a viewing history includes the identification data of the articles introduced into the main receptacle, the identification of articles removed for viewing, the number of viewings per article, the total viewing duration of a viewed article, and/or the article purchased. The viewing history will be uploaded to external data storage for subsequent processing and use for information compilation.

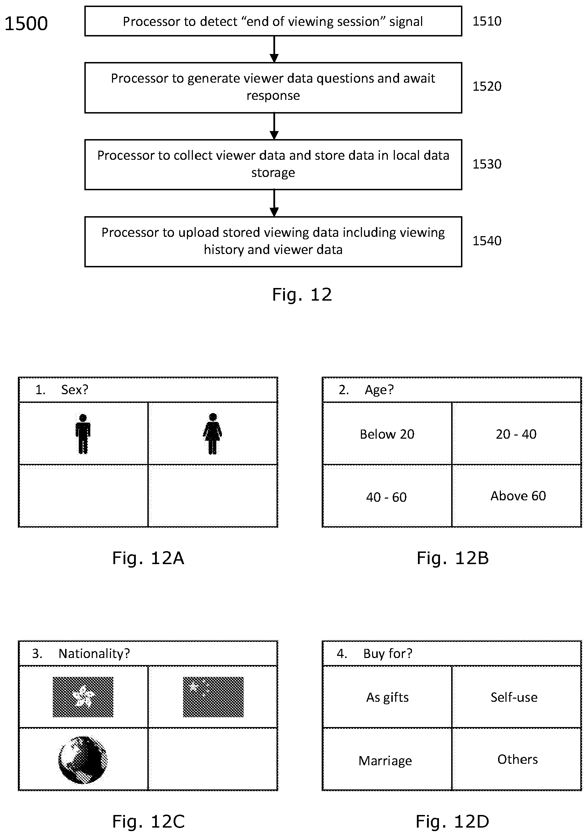

In some modes of operation, the apparatus **100** is to operate to collect viewer information after the completion or end of a viewing session. Upon detection of signals indicating the end of a viewing session, the processor **142** will execute instructions to enter into viewer data collection mode as depicted in the flow diagram **1500** of Figure 12. Referring to Figure 12, an operator is to inform the apparatus **100** that a viewing has come to an end by sending a command to the apparatus **100** at **1510.** The command may be in the form of touching an [end of viewing session] icon on the display, for example the first display having touch screen sensors. Upon receipt of the "end of viewing session" command, the processor **142** will generate questions with accompanying icons on the display at **1520** and await operator response. The icons will appear sequentially to facilitate sequential response by an operator. Example questions may include gender of viewer as depicted in Figure 12A, age group as depicted in Figure 12B, geographic origin as depicted in Figure 12C, and purpose of that viewing session as depicted in Figure 12D. After responses have been received, the collected viewer data will be linked with the viewing and/or purchasing information of that viewing session and stored in the local data storage at **1530.** The collected viewer data together with the viewing and/or purchase information will be uploaded to external data storages for subsequent data processing at **1540.** Data collected by different viewing apparatus will be uploaded to a data processing facility for subsequent use and analyses. The uploaded data may be from different presentation apparatus with unique individual identification data and from different locations with location identification data to facilitate data analyses. The data uploading may be in response to polling of the data processing facility or by scheduled upload set in the apparatus **100.** In some examples, the data uploading may be at the end of a business day so that all viewing data collected during that business day are uploaded. The viewing data may include viewing information such as identification data of item or items presented in that viewing session, identification data of item or items viewed, and number of viewing per item during that viewing session; purchase information including identification data of item or items purchases, per-item purchase price and total purchase price resulted from that viewing session; and viewer data.

After the viewing session has been completed and before the viewing data are uploaded to the data processing facility, the viewing data will be stored in the local data storage. The general information and the article specific information downloaded during the last viewing session will be kept for retrieval and possible use during subsequent viewing sessions. Where as a result of analyses of recently collected viewing data, some articles or class of articles are of particular demand or interest to viewers, specific data on such articles and classes of articles will be downloaded at initialization for more expeditious presentation of information to meet anticipated demand.

While the present disclosure has been illustrated with reference to the above example, it should be appreciated that the examples are for illustration only and shall not be used to restrict scope of the disclosure. For example, while various standards and protocols have been used herein for convenience, it should be understood that the present disclosure is not limited to such standards and/or protocols. Furthermore, where an apparatus comprising a processor is described, it should be appreciated that the processor can be a single processor, multiple processors, a cluster of processors, or distributed processors without loss of generality. Where a method or process is described herein, it should be appreciated that the method or process can be implemented by means of hardware, software, firmware or a combination thereof without loss of generality.

**Table of numerals**

| | | | |
|---|---|---|---|
| Apparatus | 100 | Display region | 120 |
| Main receptacle | 110 | First display | 122 |
| Upper housing | 112 | First display device | 122a |
| Lower housing | 114 | 7-inch touch screen LCD display | 122b |
| Main surface of tray | 116 | Second display | 124 |
| Peripheral of tray | 118 | Second display device | 124a |
| operator's end | 119a | 4-inch LCD display | 124b |
| viewer's end | 119b | Main control board | 150 |
| detection and display circuitry | 140 | Power supply | 152 |
| processing device | 142 | Secondary battery | 152a |
| CPU | 142a | WiFi | 154 |
| first detection device | 144 | Power switch | 156 |
| first antenna | 144a | Local data storage | 158 |
| Article detection antenna | 144b | RF circuitry | 148 |
| second detection device | 146 | RFID module | 148a |
| second antenna | 146a | RFID interrogator | 148b |
| peripheral detection device | 146b | RF Switch | 148c |
| detection window | 146c | Top surface of metal casing | 149 |

## Claims

1. A serving apparatus (100) comprising a main receptacle (110) for holding articles for customer selection, a data storage device (158), a processing device comprising a processor (142), an RFID first detector (144) comprising a first antenna (144a) which is to detect and collect product identification information associated with an RFID tagged article when said article is first introduced or checked-in into said main receptacle (110) during a serving session, and an RFID second detector (146) comprising a second antenna (146a) which is at a location distal from the main receptacle (110), oriented to detect radio frequency signals coming from outside of the apparatus and shielded to prevent detecting RFID tags attached to articles on the main receptacle (110) and to check out or deregister an article after said article has been removed from said main receptacle (110) and presented at said RFID second detector (146); wherein the processor (142) is to classify an RFID tagged article as being viewed if the article is removed from the main receptacle for a time exceeding a threshold time and not checked out by the threshold time and to operate to log viewing history of the RFID tagged article or articles and to store the viewing history in the data storage device (158); and wherein the viewing history includes the product identification information of articles introduced into the main receptacle, the product identification information of articles removed for viewing, the number of viewings per article, total viewing duration of a viewed article, and/or articles purchased.

2. A serving apparatus according to Claim 1, wherein the processor (142) is to collect and store product identification information associated with articles introduced into said main receptacle (110) until receipt of a signal signifying end of said serving session.

3. A serving apparatus according to Claims 1 and 2, wherein the processor (142) is to treat a checked-in article as a floating article which is being viewed if the checked-in article is moved out of the main receptacle (110) and not checked out and to store viewing duration of the floating article as part of the viewing history for subsequent or future use, and wherein the processor (142) is to collect and store customer specific information and to associate said customer specific information with said stored product identification information associated with said articles at the end of said serving session, said customer specific information being specific to a customer of said serving session.

4. A serving apparatus according to Claim 3, wherein said customer specific information includes one or more of the following types of information of a customer: gender, age, demographic data, articles purchased, purposes of or events leading to purchase in said serving session.

5. A serving apparatus according to any of the preceding Claims, wherein the processor (142) is to cause a selected portion of said product identification information associated with an article to be displayed on said apparatus, said product identification information including one or more of the following product identification, product appearance, weight, unit price, available discount.

6. A serving apparatus according to any of the preceding Claims, wherein the first detector (144) comprises a wireless sensor and the product identification information associated is carried on an RFID (radio frequency identification) tag attached to the article.

7. A serving apparatus according to Claim 6, wherein said RFID tag is in the form of a folded sheet and wherein the apparatus is such that said RFID tag at a check-out port (136c) of the second antenna (146b) is out of detection range of the first antenna (144b) due to the distance of separation and radio frequency shielding between the check-out port (136c) and the first antenna (144b).

8. A serving apparatus according to Claims 6 or 7, wherein said RFID tag carries human readable product identification information and the check-out port (136c) and the first antenna (144b) are at a separation distance of 10cm-15cm.

9. A serving apparatus according to any of the preceding Claims, wherein the processor (142) is to continuously track presence of an article on the main receptacle (110) after first introduction of said article onto said main receptacle (110) through continuous detection of RFID signals emitted by a tag associated with said article.

10. A serving apparatus according to any of the preceding Claims, wherein the apparatus comprises a telecommunications frontend to facilitate retrieval of product identification information from a remote source and to upload information collected during a serving session to a remote destination.

11. A serving apparatus according to any of the preceding Claims, wherein the main receptacle (110) comprises an open tray to facilitate a viewer to view and access articles on the main receptacle (110) and to facilitate a viewer to remove an article for close examination or appreciation.

12. A serving apparatus according to any of the preceding Claims, wherein the apparatus comprising the first detector (144) and the second detector (146) is to operate to monitor and track said article and their subsequent status.

13. A serving apparatus according to any of the preceding Claims, wherein the first antenna (144a) comprises planar detection elements which are placed immediately underneath the main receptacle (110) and defines a detection plane which is parallel or substantially parallel to a main surface (116) of the main receptacle (110) and the second antenna (146a) defines a detection plane which is orthogonal or substantially orthogonal to the detection plane of the first antenna (144a), and radio frequency signal shielding is provided on a backside of the second antenna (146a) which faces the main receptacle (110) to mitigate receipt of unwanted or spurious radio frequency signals.

14. A serving apparatus according to Claim 1, wherein the information to be logged to form the viewing history includes the identification information of the articles introduced into the main receptacle (110), the identification information of the articles removed for viewing, the number of viewings per article, the total viewing duration of a viewed article, and/or the article purchased.

15. A serving apparatus according to any of the Claims, wherein the serving apparatus comprises a display device to display the product identification and presence and absence information and/or wherein the display region of the display device is adjacent the main receptacle (110).

## Patentansprüche

1. Präsentationsvorrichtung (100), einen Hauptbehälter (110) zum Halten von Artikeln zur Kundenauswahl, eine Datenspeichereinrichtung (158) und eine Prozessoreinrichtung umfassend, die einen Prozessor (142), einen ersten RFID-Detektor (144), welcher eine erste Antenne (144a) umfasst, die zum Erkennen und Erfassen der Produktidentifikationsinformationen vorgesehen ist, die mit einem mit RFID-Tag gekennzeichneten Artikel verbunden sind, wenn der Artikel während eines Präsentationsvorgangs zuerst im Hauptbehälter (110) eingeführt oder angemeldet wird, und einen zweiten RFID-Detektor (146) umfasst, welcher eine zweite Antenne (146a) umfasst, die sich an einem vom Hauptbehälter (110) entfernten Ort befindet und zum Erkennen der Funkfrequenzsignale orientiert ist, die von außerhalb der Vorrichtung kommen, sowie abgeschirmt ist, um das Erkennen von RFID-Tags zu verhindern, die an Artikeln im Hauptbehälter (110) angebracht sind, sowie um einen Artikel abzumelden oder aus dem Register zu löschen, nachdem der Artikel aus dem Hauptbehälter (110) entfernt und an dem zweiten RFID-Detektor (146) präsentiert wurde; wobei der Prozessor (142) zum Klassifizieren eines mit RFID-Tag gekennzeichneten Artikels mit "wird betrachtet" vorgesehen ist, wenn der Artikel für einen Zeitraum aus dem Hauptbehälter (110) entfernt wird, der eine Schwellwertzeit überschreitet, und nach Ablauf der Schwellwertzeit nicht abgemeldet wurde, sowie zum Betreiben einer Protokollierung der Betrachtungshistorie des oder der mit RFID gekennzeichneten Artikels oder Artikel sowie zum Speichern der Betrachtungshistorie in der Datenspeichereinrichtung (158); und wobei die Betrachtungshistorie die Produktidentifikationsinformationen der Artikel, die in den Hauptbehälter (110) eingeführt wurden, die Produktidentifikationsinformationen der Artikel, die zum Betrachten entfernt wurden, die Anzahl der Betrachtungsvorgänge pro Artikel, die Gesamtbetrachtungsdauer für einen betrachteten Artikel und/oder die gekauften Artikel beinhaltet.

2. Präsentationsvorrichtung nach Anspruch 1, wobei der Prozessor (142) zum Erfassen und Speichern der Produktidentifikationsinformationen vorgesehen ist, die mit den Artikeln verbunden sind, die bis zum Empfang eines Signals, welches das Ende des Präsentationsvorgangs kennzeichnet, in den Hauptbehälter (119) eingeführt wurden.

3. Präsentationsvorrichtung nach Anspruch 1 und 2, wobei der Prozessor (142) zum Behandeln eines angemeldeten Artikels als gleitenden Artikel, der "betrachtet wird", wenn der angemeldete Artikel aus dem Hauptbehälter (110) herausbewegt und nicht abgemeldet wird, und zum Speichern der Betrachtungsdauer des gleitenden Artikels als Teil der Betrachtungshistorie für eine anschließende oder zukünftige Verwendung vorgesehen ist, und wobei der Prozessor (142) zum Erfassen und Speichern kundenspezifischer Informationen und zum Verbinden der kundenspezifischen Informationen mit den gespeicherten Produktidentifikationsinformationen vorgesehen ist, die mit den Artikeln am Ende des Präsentationsvorgangs verbunden sind, wobei die kundenspezifischen Informationen speziell auf einen Kunden des Präsentationsvorgangs zutreffen.

4. Präsentationsvorrichtung nach Anspruch 3, wobei die kundenspezifischen Informationen einen oder mehrere der folgenden Arten von Informationen über einen Kunden enthalten: Geschlecht, Alter, demografische Angaben, gekaufte Artikel, Zwecke des Kaufs oder Ereignisse, die zum Kauf in dem Präsentationsvorgang führten.

5. Präsentationsvorrichtung nach einem der vorstehenden Ansprüche, wobei der Prozessor (142) zum Veranlassen der Anzeige eines ausgewählten Anteils der Produktidentifikationsinformationen, die mit einem Artikel verbunden sind, an der Präsentationsvorrichtung vorgesehen ist und wobei die Produktidentifikationsinformationen einen oder mehrere der folgenden Bestandteile beinhalten: Produktidentifikation, Produkterscheinungsbild, Gewicht, Stückpreis, verfügbarer Preisnachlass.

6. Präsentationsvorrichtung nach einem der vorstehenden Ansprüche, wobei der erste Detektor (144) einen drahtlosen Sensor umfasst und ein RFID- (Radio Frequency Identification-) Tag, das an dem Artikel angebracht ist, die verbundenen Produktidentifikationsinformationen trägt.

7. Präsentationsvorrichtung nach Anspruch 6, wobei das RFID-Tag in Form eines gefalteten Blatts vorliegt und wobei die Vorrichtung in solcher Form vorliegt, dass sich das RFID-Tag an einem Abmeldungspunkt (136c) der zweiten Antenne (146b) aufgrund des Trennungsabstands und der Funkfrequenzabschirmung zwischen dem Abmeldungspunkt (136c) und der ersten Antenne (144b) außerhalb des Erkennungsbereichs der ersten Antenne (144b) befindet.

8. Präsentationsvorrichtung nach Anspruch 6 oder 7, wobei das RFID-Tag vom Menschen lesbare Produktidentifikationsinformationen trägt und wobei sich der Abmeldungspunkt (136c) und die erste Antenne (144b) in einem Trennungsabstand von 10 cm bis 15 cm voneinander befinden.

9. Präsentationsvorrichtung nach einem der vorstehenden Ansprüche, wobei der Prozessor (142) durch eine kontinuierliche Erkennung des RFID-Signals, das von einem Tag emittiert wird, welches mit dem Artikel verbunden ist, zum kontinuierlichen Verfolgen der Anwesenheit eines Artikels im Hauptbehälter (110) nach der ersten Einführung des Artikels in den Hauptbehälter (110) vorgesehen ist.

10. Präsentationsvorrichtung nach einem der vorstehenden Ansprüche, wobei die Vorrichtung ein Telekommunikations-Frontend zur Ermöglichung des Abrufens der Produktidentifikationsinformationen aus einer entfernten Quelle und zum Hochladen der während eines Präsentationsvorgangs erfassten Informationen an ein entferntes Ziel umfasst.

11. Präsentationsvorrichtung nach einem der vorstehenden Ansprüche, wobei der Hauptbehälter (110) eine offene Schale umfasst, um einem Betrachter das Betrachten und den Zugang zu Artikeln im Hauptbehälter (110) zu ermöglichen und um einem Betrachter das Entnehmen eines Artikels für eine eingehendere Untersuchung oder Beurteilung zu ermöglichen.

12. Präsentationsvorrichtung nach einem der vorstehenden Ansprüche, wobei die Vorrichtung, die den ersten Detektor (144) und den zweiten Detektor (146) umfasst, für den Betrieb zum Überwachen und Verfolgen des oder der Artikel sowie ihrer nachfolgenden Status vorgesehen ist.

13. Präsentationsvorrichtung nach einem der vorstehenden Ansprüche, wobei die erste Antenne (144a) planare Erkennungselemente umfasst, die unmittelbar unter dem Hauptbehälter (110) platziert sind und eine Erkennungsebene definieren, die parallel oder im Wesentlichen parallel zu einer Hauptfläche (116) des Hauptbehälters (110) ist, und wobei die zweite Antenne (146a) eine Erkennungsebene definiert, die orthogonal oder im Wesentlichen orthogonal zur Erkennungsebene der ersten Antenne (144a) ist, und wobei die Funkfrequenz-Signalabschirmung auf einer Rückseite der zweiten Antennen (146a) bereitgestellt wird, die dem Hauptbehälter (110) gegenüberliegt, um den Empfang ungewollter oder falscher Funkfrequenzsignale zu minimieren.

14. Präsentationsvorrichtung nach Anspruch 1, wobei die Informationen, die protokolliert werden sollen, um die Betrachtungshistorie zu bilden, die Identifikationsinformationen der Artikel, die in den Hauptbehälter (110) eingeführt wurden, die Identifikationsinformationen der Artikel, die zum Betrachten entfernt wurden, die Anzahl der Betrachtungsvorgänge pro Artikel, die Gesamtbetrachtungsdauer eines betrachteten Artikels und/oder die gekauften Artikel beinhalten.

15. Präsentationsvorrichtung nach einem der Ansprüche, wobei die Präsentationsvorrichtung eine Anzeigeeinrichtung zum Anzeigen der Produktidentifikations- sowie An- und Abwesenheitsinformationen umfasst und/oder wobei der Anzeigebereich der Anzeigeeinrichtung an den Hauptbehälter (110) angrenzt.

## Revendications

1. Appareil de service (100) comprenant un contenant principal (110) destiné à contenir des articles à des fins de sélection par des clients, un dispositif de stockage de données (158), un dispositif de traitement comprenant un processeur (142), un premier détecteur RFID (144) comprenant une première antenne (144a) qui doit détecter et collecter des informations d'identification de produit associées à un article étiqueté par RFID, lorsque ledit article est introduit ou entré pour la première fois dans ledit contenant principal (110) au cours d'une session de service, et un second détecteur RFID (146) comprenant une seconde antenne (146a) qui se trouve à une position distale par rapport au contenant principal (110), orientée pour détecter des signaux radioélectriques reçus en provenance de l'extérieur de l'appareil et blindée pour empêcher la détection d'étiquettes RFID attachées à des articles dans le contenant principal (110) et pour sortir ou radier un article après que ledit article a été retiré dudit contenant principal (110) et présenté audit second détecteur RFID (146) ; dans lequel le processeur (142) doit classer un article étiqueté par RFID comme étant observé, si l'article est retiré du contenant principal pendant un temps dépassant un seuil de temps et n'est pas sorti avant le seuil de temps et doit assurer la journalisation de l'historique d'observation de l'article ou des articles étiqueté(s) par RFID, et stocker l'historique d'observation dans le dispositif de stockage de données (158) ; et dans lequel l'historique d'observation inclut les informations d'identification de produits d'articles introduits dans le contenant principal, les informations d'identification de produits d'articles retirés à des fins d'observation, le nombre d'observations par article, la durée totale d'observation d'un article observé et/ou les articles achetés.

2. Appareil de service selon la revendication 1, dans lequel le processeur (142) doit collecter et stocker des informations d'identification de produits associées à des articles introduits dans ledit contenant principal (110), jusqu'à la réception d'un signal signifiant la fin de ladite session de service.

3. Appareil de service selon les revendications 1 et 2, dans lequel le processeur (142) doit traiter un article entré comme un article flottant qui est en cours d'observation, si l'article entré est ôté du contenant principal (110) et n'est pas sorti, et doit stocker la durée d'observation de l'article flottant dans le cadre de l'historique d'observation à des fins d'utilisation ultérieure ou future, et dans lequel le processeur (142) doit collecter et stocker des informations spécifiques à un client et associer lesdites informations spécifiques à un client auxdites informations d'identification de produits stockées, associées auxdits articles à la fin de ladite session de service, lesdites informations spécifiques à un client étant spécifiques à un client de ladite session de service.

4. Appareil de service selon la revendication 3, dans lequel lesdites informations spécifiques à un client incluent un ou plusieurs des types suivants d'informations sur un client : sexe, âge, données démographiques, articles achetés, buts de l'achat ou événements y donnant lieu dans ladite session de service.

5. Appareil de service selon l'une quelconque des revendications précédentes, dans lequel le processeur (142) doit faire qu'une partie sélectionnée desdites informations d'identification de produit associées à un article s'affiche sur ledit appareil, lesdites informations d'identification de produit incluant une ou plusieurs des informations suivantes : identification de produit, aspect de produit, poids, un prix unitaire, remise disponible.

6. Appareil de service selon l'une quelconque des revendications précédentes, dans lequel le premier détecteur (144) comprend un capteur sans fil et les informations d'identification de produit associées figurent sur une étiquette RFID (identification par radiofréquence) attachée à l'article.

7. Appareil de service selon la revendication 6, dans lequel ladite étiquette RFID se présente sous la forme d'une feuille pliée et dans lequel l'appareil est tel que ladite étiquette RFID à un port de sortie (136c) de la seconde antenne (146b) se trouve hors de la portée de détection de la première antenne (144b), du fait de la distance de séparation et du blindage contre les fréquences radioélectriques entre le port de sortie (136c) et la première antenne (144b).

8. Appareil de service selon la revendication 6 ou 7, dans lequel ladite étiquette RFID est porteuse d'informations d'identification de produit lisibles par des humains et le port de sortie (136c) et la première antenne (144b) ont une distance de séparation de 10 cm à 15 cm.

9. Appareil de service selon l'une quelconque des revendications précédentes, dans lequel le processeur (142) doit réaliser un suivi continu de la présence d'un article dans le contenant principal (110), après la première introduction dudit article dans ledit contenant principal (110), par détection continue de signaux RFID émis par une étiquette associée audit article.

10. Appareil de service selon l'une quelconque des revendications précédentes, dans lequel l'appareil comprend un frontal de télécommunications pour permettre la récupération d'informations d'identification de produits auprès d'une source distante et pour télécharger des informations collectées au cours d'une session de service vers une destination distante.

11. Appareil de service selon l'une quelconque des revendications précédentes, dans lequel le contenant principal (110) comprend un plateau ouvert pour permettre à un observateur d'observer des articles et d'y accéder dans le contenant principal (110) et pour permettre à un observateur de retirer un article aux fins d'un examen ou d'une appréciation de près.

12. Appareil de service selon l'une quelconque des revendications précédentes, dans lequel l'appareil comprenant le premier détecteur (144) et le second détecteur (146) doit assurer la surveillance et le suivi dudit article et de son état ultérieur.

13. Appareil de service selon l'une quelconque des revendications précédentes, dans lequel la première antenne (144a) comprend des éléments de détection plans qui sont placés immédiatement sous le contenant principal (110) et définit un plan de détection qui est parallèle ou sensiblement parallèle à une surface principale (116) du contenant principal (110), et la seconde antenne (146a) définit un plan de détection qui est orthogonal ou sensiblement orthogonal au plan de détection de la première antenne (144a), et un blindage contre les signaux radioélectriques est placé sur une face arrière de la seconde antenne (146a) qui est en regard du contenant principal (110) pour atténuer la réception de signaux radioélectriques indésirables ou parasites.

14. Appareil de service selon la revendication 1, dans lequel les informations à journaliser pour former l'historique d'observation incluent les informations d'identification des articles introduits dans le contenant principal (110), les informations d'identification des articles retirés à des fins d'observation, le nombre d'observations par article, la durée totale d'observation d'un article observé et/ou l'article acheté.

15. Appareil de service selon l'une quelconque des revendications, dans lequel l'appareil de service comprend un dispositif d'affichage pour afficher l'identification de produit ainsi que la présence et l'absence d'informations, et/ou dans lequel la région d'affichage du dispositif d'affichage est adjacente au contenant principal (110).
